# EUROPEAN PATENT APPLICATION

(11) **EP 2 603 038 A1**
(43) Date of publication of application: **12.06.2013**
(21) Application number: 11777194.9
(22) Date of filing: 17.05.2011
(51) Int. Cl.: H04W 36/00

(54) **CELLULAR COMMUNICATION SYSTEM, METHOD FOR TERMINAL HANDOVER BETWEEN CELLS AND MACRO BASE STATION**

(30) Priority: 03.08.2010 CN 201010246755
(71) Applicant: Huawei Technologies Co., Ltd., Shenzhen, Guangdong 518129 (CN)
(72) Inventor: WU, Jianjun, Shenzhen Guangdong 518129 (CN); LU, Lei, Shenzhen Guangdong 518129 (CN)
(74) Representative: Epping - Hermann - Fischer
(86) International application number: PCT/CN2011/074160
(87) International publication number: WO 2011/137775

(57) **Abstract**

The present invention discloses a cellular communication system, an inter-cell handover method for a UE, and a macro base station. The cellular communication system includes a macro base station and at least one micro base station within coverage of the macro base station. The macro base station is configured to: establish a control channel for a UE served by the micro base station; perform an access management operation for the UE served by the micro base station within the coverage of the macro base station; and receive a handover request of the UE and hand over the UE to another micro base station within the coverage of the macro base station. The micro base station is configured to establish a data channel for the accessed UE and perform data transmission with the UE. With the present invention, the control plane of the user served by the micro base station can be separated from the data plane of the user, so that the resources of the micro base station can be better used for data communication. Hence, the negative impacts on the system which are caused by the coexistence of macro cells and micro cells in the networking can be reduced.

## Description

### FIELD OF TECHNOLOGY

The present invention relates to the field of communication technologies, and in particular, to a cellular communication system, an inter-cell handover method for a UE (User Equipment), and a macro base station.

### BACKGROUND

In a second generation communication system, requirements of users focus on voice calls and short messages, no high requirement is imposed on the spectrum efficiency, and the system is mainly restricted by the size of a coverage area. Therefore, networking of macro cells is widely applied, base stations are generally far away from each other, and the cost of this kind of networking is low.

With the development of the third generation and fourth generation communication systems, data transmission becomes a new demand, and in particular, real-time video transmission has much higher requirements on the spectrum efficiency and network throughput. However, because a macro cell has a large coverage area and serves a large number of users, the throughput of the macro cell is limited. Especially, at the cell edges, because the signal-to-noise ratio (Signal-to-Noise Ratio, SNR) is low, only the basic service requirements can be satisfied, and data rate requirements cannot be satisfied. Evidently, the conventional networking of macro cells cannot satisfy the requirements of data transmission.

To overcome the disadvantages of macro cells, the cell radius may be reduced, and networking of micro cells may be applied. This may increase the system throughput and effectively improve the SNR of users at the cell edges. However, because a base station of the micro cell has a small coverage area, if a UE is in a moving state, the UE may need to be frequently handed over between different base stations, resulting in service discontinuity.

Based on the above features, in the conventional cellular communication system, the micro cell is generally only used as a supplement to the macro cell, for example, the micro cell may be used to extend the coverage of the macro cell or solve the problems of some coverage holes in order to improve the SNR of users located at the cell edges.

However, in the prior art, because the macro cell and micro cell are two independent networks, the macro cell and micro cell respectively interact with the network side through network-side function entities independently, which may cause some negative impacts on the system. For example, because the coverage area of the micro cell is small, when the UE is moving, the UE may need to be frequently handed over to other macro cells or other micro cells, resulting in service discontinuity; to ensure service continuity, an enhancement solution is required, but the enhancement solution may cause complex network deployment, and so on.

### SUMMARY

The present invention provides a cellular communication system, an inter-cell handover method for a UE, and a macro base station to reduce the negative impacts on the system which are caused by the coexistence of macro cells and micro cells in the networking.

The present invention provides the following solutions:
A cellular communication system includes a macro base station and at least one micro base station within coverage of the macro base station, where:
   the macro base station is configured to: establish a control channel for a UE served by the micro base station; perform an access management operation for the UE served by the micro base station within the coverage of the macro base station; and receive a handover request of the UE and hand over the UE to another micro base station within the coverage of the macro base station; and
   the micro base station is configured to establish a data channel for the accessed UE and perform data transmission with the UE.

A UE access management method includes:
sending periodically, by a macro base station, system broadcast messages of itself and system broadcast messages of each micro base station within coverage of the macro base station, wherein the system broadcast messages is used for the UE to obtains related system parameters to access a network, wherein the micro base station within the coverage of the macro base station establishes a data channel for the UE when the UE needs to access the micro base station;
performing, by the macro base station, quality of service Qos authorization for the UE for network access; and
establishing, by the macro base station, a control channel for the UE according to QoS, and establishing and maintaining user information.

An inter-cell handover method for a UE includes:
receiving, by the UE, neighboring cell information of a current cell broadcast by a macro base station, where the current cell is a micro cell within the coverage of the macro base station and the neighboring cells of the current cell include other macro cells or other micro cells within the coverage of the macro base station;
according to the neighboring cell information, selecting a target cell for a handover, and notifying information of the determined target cell to the macro base station, so that the macro base station initiates a handover request to a base station of the target cell; and
receiving, by the UE, a handover command sent by the macro base station, and performing a cell handover.

A macro base station includes:
a control channel establishing unit, configured to establish a control channel for a UE served by a micro base station within coverage of the macro base station;
an access management unit, configured to perform an access management operation for the UE served by the micro base station within the coverage of the macro base station; and
a handover unit, configured to receive a handover request of the UE and hand over the UE to another micro base station within the coverage of the macro base station.

According to the embodiments of the present invention, the present invention discloses the following technical effects:
According to the embodiments of the present invention, the control channel of the user served by the micro base station can be separated from the data channel of the user, and the macro base station establishes the control channel of the UE to implement control plane related operations. Therefore, the micro base station is only used to establish the data plane link of the UE to implement data transmission. Therefore, the resources of the micro base station can be better used for data communication. Hence, the negative impacts on the system which are caused by the coexistence of macro cells and micro cells in the networking can be reduced.

### BRIEF DESCRIPTION OF THE DRAWING(S)

FIG. 1 is a schematic diagram illustrating control plane and data plane links of a user served by a micro base station in the prior art;
FIG. 2 is a schematic diagram illustrating control plane and data plane links of a user served by a micro base station according to an embodiment of the present invention;
FIG. 3 is a flowchart of a UE access management method according to an embodiment of the present invention;
FIG. 4 is a flowchart of an inter-cell handover method for a UE according to an embodiment of the present invention;
FIG. 5 is a schematic diagram of a cellular communication system according to an embodiment of the present invention; and
FIG. 6 is a schematic diagram of a macro base station according to an embodiment of the present invention.

### DETAILED DESCRIPTION

The technical solutions provided by the embodiments of the present invention are hereinafter described clearly and completely with reference to the accompanying drawings. It is evident that the described embodiments are only some exemplary embodiments of the present invention, rather than all embodiments of the present invention. All other embodiments that persons of ordinary skill in the art obtain without creative efforts based on the embodiments of the present invention also fall within the protection scope of the present invention.

Firstly, it should be noted that in the prior art, there are negative impacts on the system because the macro cell and micro cell are two independent networks, that is, the functions to be implemented by the micro base station and macro base station are basically the same. Therefore, in terms of functions, the micro base station and macro base station play an equal role. However, in this equal relationship, negative impacts on the system may be caused. For example, when a UE accesses a micro base station, the micro base station is responsible for the data plane and control plane of the UE, that is, the time-frequency resources of the micro base station are not only used for data communication, but also used for the control on the control plane of the UE, including user access management and mobility management.

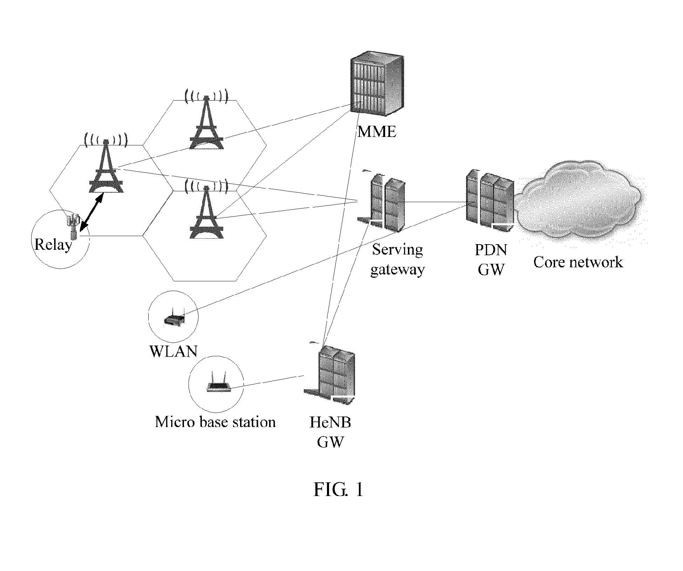

FIG. 1 is a schematic diagram of a data plane and a control plane of a user served by a micro base station in the prior art, showing three different types of micro base stations in the prior art: relay, WLAN (Wireless Local Area Network, wireless local area network), and Femto cell (HomeNodeB). The connection from a micro base station to an MME (Mobility Management Entity, mobility management entity) is a control plane link, and the connection from the micro base station to a Serving GW (Gateway, gateway) and then to a PDN (Public Data Network, public data network) GW is a data plane link. As can be seen from the figure, the micro base station needs to establish not only the control plane but also the data plane.

However, this independency causes some negative impacts on the conventional cellular communication system. For example, to complete a handover control process, each micro base station may need to periodically broadcast respective neighboring cell information, so that when a UE needs to be handed over, the UE needs to scan multiple broadcast messages and finally determine a target cell for the handover. Consequently, the normal services may be interrupted, and resources of the micro base station are wasted.

Based on the above analysis, a new network architecture and a new processing mode are proposed in the embodiments of the present invention. To be specific, the data plane of the UE is separated from the control plane of the UE, the control plane is controlled by the macro cell network, and the micro cell is only responsible for data communication on the data plane. In this way, a three-layer network structure is formed: core network side - macro cell - micro cell. Even for UEs that access the micro cell, the macro cell performs uniform management and control, including user management and mobility management. The micro cell only needs to transmit data received from the network side to the UEs or transmit the data of the UEs to the network side.

It should be noted that in the embodiments of the present invention, one macro base station may correspond to at least one micro base station within coverage of the macro base station, where the micro base station may exist in the following forms:
(1) The micro base station may refer to a micro base station in the prior art, which works as a WLAN, a femto cell (HomeNodeB), and so on. This type of micro base station is deployed for purposes other than extending the coverage of the macro base station, that is, it may be deployed within the signal coverage of the macro base station to serve as a supplement to a 3GPP access network or solve family access problems. In other words, in the embodiments of the present invention, the micro base stations within the coverage of the macro base station may include micro base stations that work as WLANs, femto cells (HomeNodeBs), and so on within the signal coverage of the macro base station.
   In other words, in this case, the macro cell and micro cell in the cellular communication system in the prior art may be used, and there is no need to re-plan cells. Only the working modes of the macro base station and the micro base station and the relationship between the macro base station and the micro base station are changed. The macro base station needs to complete the following tasks: For UEs that access the macro base station, the macro base station needs to implement data communication of these UEs and manage these UEs; meanwhile, the macro base station needs to perform uniform management and mobility control for UEs that access the micro base station. The task of the micro base station is to maintain the data plane of a UE when the UE accesses the micro base station.
   Evidently, in the first case, separation of the control plane and the data plane may be implemented for the UEs that access the micro base station.
(2) In the embodiments of the present invention, cells may also be re-planned. For example, the signal coverage (namely, the macro cell) of the original macro base station may be divided into multiple micro cells, and one micro base station is deployed in each micro cell, and meanwhile, the original macro base station may still be reserved. It should be noted that this type of micro base station may be different from a conventional WLAN and femto cell. For example, in an LTE network, this type of micro base station may be an LTE base station. That is, the micro base station may work in the same mode as the original macro base station. The only difference is that the signal coverage of the micro base station is smaller than that of the macro base station.

Certainly, another deployment mode may be also available, which is on the basis that the micro base station is deployed first to ensure the coverage, a macro base station is added to improve mobility. Or, in other words, the networking in this case is equivalent to the networking of micro cells, with the number of the base station increased and the cell radius reduced. However, different from the networking of micro cells only, this networking allows multiple micro cells to form one or more logical micro cell clusters and requires a macro base station to be deployed for the logical micro cell cluster.

Evidently, the macro base station and newly added micro base station in the embodiments of the present invention are functionally different from the conventional macro base station and micro base station. In the embodiments of the present invention, the macro base station performs control, such as access management or mobility management, for UEs within signal coverage of the macro base station, and the micro base station is responsible for implementing corresponding data communication. Therefore, the separation of the control plane and data plane of UEs is implemented.

It should be noted that in the second case, with respect to some specific types of services, the macro base station may be responsible for implementing corresponding data communication.

As can be seen from the above two cases, regardless of the form of the micro base station, the micro base station is responsible for user data plane operations, and the macro base station implements user control plane operations. Certainly, in some special cases, the macro base station may implement some user data plane operations.

To sum up, the embodiments of the present invention provide a cellular communication system, including a macro cell and at least one micro cell within coverage of the macro base station. In the system, the user control process is completed by the macro base station, and the micro base station only needs to receive control signaling sent by the macro base station and performs corresponding operations to implement control on the user control plane; certainly, the main functions of the micro base station are to establish a data channel for a user and implement data transmission when a UE accesses the micro cell.

The topological relationship between the macro base station and the micro base stations (that is, which micro base stations correspond to one macro base station) may be established and maintained by the macro base station, that is, the macro base station may detect which micro base stations are within coverage of the macro base station, check the topological relationship with these micro base stations, and maintain the topological relationship. In other words, the macro base station needs to establish and maintain the topological relationship between the base stations, in addition to establishing the user control plane. Certainly, in practical applications, this topological relationship may be established and maintained by a network-side control entity. In this case, the macro base station may be dedicated to establishing a user control plane channel, so that the resources of the macro base station can be utilized more effectively.

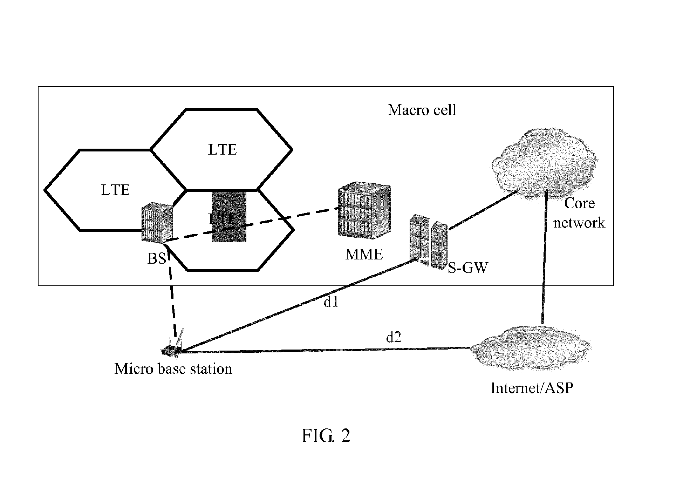

FIG. 2 is a schematic diagram illustrating control channels and data channels established in a system structure according to an embodiment of the present invention, where the BS is a macro base station and there are one micro cell Micro Cellular and three LTE micro base stations. FIG. 2 shows a control channel and a data channel of a UE in the Micro Cellular, where the dashed line indicates the control channel and the solid line indicates the data channel.

To sum up, in the cellular communication network structure provided by the embodiment of the present invention, the entire cellular system is divided into multiple subsystem, the number of subsystems is equal to the number of macro cells, and each subsystem is made up of one macro cell and at least one micro cell within coverage of the macro base station. Thereby, the macro base station implements control plane operations for the micro cells within the coverage of the macro cell. For example, in FIG. 2, the BS working as a macro cell and the three LTE micro base stations working as micro cells and the Micro Cellular constitute a subsystem. For a UE that accesses the micro cell Micro Cellular, the macro base station BS establishes a control channel, and the micro base station Micro Cellular establishes a data channel. Thereby, the micro base station Micro Cellular is only responsible for data transmission in the communication process, and operations related to the UE such as access management and mobility management are all implemented by the macro base station BS. Evidently, the macro base station controls the control plane of the UE served by the micro base station within coverage of the macro base station, so that the resources of the micro base station may be better used for data communication. Based on service features, the payment policy of the user, and so on, the user data plane may be implemented in different modes to alleviate the backhaul pressure of the operator caused by numerous micro cell networks.

It should be noted that the micro base stations within the coverage of the macro base station in the embodiment of the present invention are all within the signal coverage of the macro cell, that is, no matter whether the micro base stations are original base stations in the system or newly deployed base stations after macro cell is re-planned, the micro base stations are all located within the signal coverage of the macro base station. Certainly, in practical applications, there may be some coverage holes, namely, locations that the signals of each macro base station are unable to cover. The coverage holes of such locations may be solved by deploying micro base stations. The micro base stations mentioned in the embodiment of the present invention do not include such micro base stations. When such micro base stations exist in the system, they may be regarded as independent of the macro cell for processing according to the method of the prior art, that is, the micro cells implement control plane and data plane operations independently.

The connection between the macro base station and the micro base station may be a wireless connection or a wired connection. The wireless connection may use an in-band transmission mode (that is, the same band is used between the macro base station and the micro base station and between the base station and the UE) and an out-band microwave transmission mode (contrary to the preceding mode). For a Relay, the in-band or out-band transmission mode may be used to solve the backhaul problem.

The structure of the cellular communication system provided by the embodiment of the present invention has been described in detail above. The following describes how to use the cellular communication system to implement specific control plane and data plane related operations.

Specifically, the control on the user control plane may include UE access management and mobility management. In addition, the macro cell may manage coordination between micro cell networks within coverage of the macro base station to solve inherent problems of the micro cell networks such as frequent handover, interference coordination, and coordinated transmission. Detailed descriptions are provided hereunder.

UE access management: the macro base station may perform uniform management for UEs served by micro base stations within coverage of the macro base station and implement user authentication and QoS authorization operations, where UE authentication includes security information creation and key distribution.

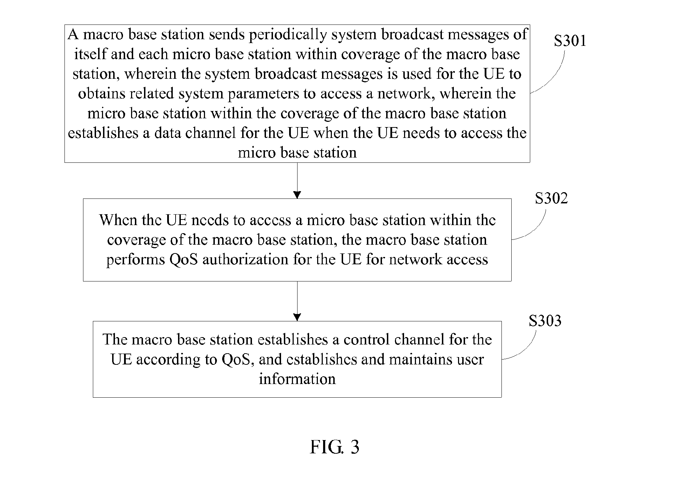

The UE access management is required when a UE accesses the network. Referring to FIG. 3, an embodiment of the present invention provides a UE access management method, including the following steps:
S301. A macro base station sends periodically system broadcast messages of itself and each micro base station within coverage of the macro base station, wherein the system broadcast messages is used for the UE to obtains related system parameters to access a network, wherein the micro base station within the coverage of the macro base station establishes a data channel for the UE when the UE needs to access the micro base station.
   The system broadcast messages of each micro base station may include the physical layer modulation and demodulation mode, channel coding mode, and center frequency point supported by each micro base station. The UE may obtain related system parameters from these messages to access the network. The system broadcast messages of all micro base stations within the coverage of the macro base station are sent by the macro base station.
S302. When the UE needs to access a micro base station within the coverage of the macro base station, the macro base station performs Qos authorization for the UE for network access.

Specifically, the UE may complete the network access authentication process through the macro base station via an MME. The MME and the macro base station establish and maintain the UE related security context and mobility context. Herein, the related security context includes a key. Meanwhile, the UE also completes the QoS authorization process for network access through the macro base station via a Serving GW and a PDN GW. The Serving GW and PDN GW establish and maintain the QoS Profile of the UE and establish a deep packet inspection policy according to a policy that is received from a PCRF in the authorization process. S303. The macro base station establishes a control channel for the UE according to QoS, and establishes and maintains user information.

If the UE needs to transmit delay-sensitive data, a data channel may be established for the UE (the data channel is only used to transmit the delay-sensitive data), and meanwhile, the user information is established and maintained. In addition, the macro base station may also establish and maintain a deep packet inspection policy.

To establish a control channel is to allocate a most basic connection on the air interface to the UE for transmitting a control command; to establish a data channel is to establish a connection for transmitting data. For example, as far as LTE is concerned, to establish a control channel is to allocate a random access channel, a paging channel, and so on to the UE; to establish a data channel is to allocate channels such as a PDCH and PUDH to the UE.

Apparently, in the embodiment of the present invention, no matter whether the UE finally establishes a data channel through the macro base station or the micro base station, the control channel is established by the macro base station, that is, no matter whether the data of the UE is finally transmitted to the network side through the macro base station or the micro base station, the related control process is completed by the macro base station. The data channel may be established by the micro base station or the macro base station. When the data channel is established by the micro base station, the data of the UE is transmitted to the network side through the micro base station. Accordingly, when the data channel is established by the macro base station, the data of the UE is transmitted to the network side through the macro base station.

It should be noted that the data channel is established for transmitting data and may need to be established according to specific data. For example, for the WEB service and FTP download service, different channels may need to be allocated. Therefore, in practical applications, channels may be established in real time according to the specific service types when there is data to be transmitted. Certainly, because information required by the UE such as the service type may be registered on the network side, a data channel may be established for the UE directly according to the registration information of the user after the UE accesses the network. For example, if a user has subscribed to the multimedia message service, after the user accesses the network, a data channel for transmitting the multimedia message service may be directly established for the UE; or, according to the features of the UE, a data channel is established in advance for some frequently used services.

The policy for establishing a data channel may be defined according to the specific service type, or the payment policy of the user, and so on. Furthermore, if the same UE needs to carry out multiple different types of services (at different time points), data channels may be established by not only the micro base station but also the macro base station; and when a specific service is carried out, a corresponding pre-established data plane is used according to the specific service type. For example, for delay-sensitive data, data transmission may be implemented by the macro base station; for a large amount of delay-insensitive data, data transmission may be implemented by the micro base station. A more detailed description of the data plane is provided hereinafter.

Finally, the UE may access one or multiple micro base stations. In this process, the network side generates a corresponding micro base station security context and sends the context to the micro base station. Specifically, the micro base station security context may be sent to the micro base station through the macro base station, or directly sent to the micro base station by a mobility management entity (such as an MME).

The UE may decide, at its discretion, which micro base station(s) the UE will attach to, or the macro base station may select a micro base station for the UE. In the case that the UE makes a decision at its discretion, the macro base station may broadcast the related system parameters of each micro base station to the UE, and the UE may obtain the related system parameters of each micro cell from the broadcast messages of the macro base station, then select to attach to a micro base station according to time-frequency synchronization information and so on, and change the receive frequency of the UE to the transmit frequency of the micro base station.

In the case that the macro base station performs uniform control, the macro base station may select, according to the current location of the UE or other information or the condition of the channel between the UE and the micro base station, a micro base station for the UE to attach to, and send the related system parameters of the micro base station to the UE, and the UE can directly access the micro base station. In this case, the UE does not need to perceive the presence of the micro base station, but directly accesses the corresponding base station according to the related system parameters sent by the macro base station (such as frequency resource blocks) and implements the corresponding service.

Although it is possible that the macro base station establishes a data channel for the UE in step 3, the data channel is generally established for transmitting delay-sensitive data. Therefore, for other types of data, a data channel needs to be established by the micro base station.

Up to now, the macro base station has completed authentication and authorization for the UE and has established a control channel and a data channel for transmitting delay-sensitive data; and the micro base station has established a data channel for transmitting other types of data. This is equivalent to making preparations for data transmission or mobility management of the UE.

Then, the UE sends control plane signaling to the macro base station; delay-sensitive data are sent to the Internet by the macro base station via the Serving GW and PDN-GW; other data (for example, high-rate data ) are sent to the Internet by the micro base station via the Serving GW and PDN-GW; low-value-added service data are directly routed to the Internet by the micro base station by local breakout (the local end is directly connected to the Internet); with respect to data classification, deep packet inspection is performed to obtain related packet information, and data is classified so that the data are transmitted on the corresponding bearer data plane.

It should be noted that delay-sensitive data are transmitted by the macro base station because no data channel transfer is required when the macro base station directly establishes a data channel.

To sum up, the macro base station is used to perform uniform management for users, which can increase the processing speed and save the overhead of the micro base station. Thereby, the resources of the micro base station can be better used for data communication, and the throughput of the micro base station is increased. Moreover, because the macro base station performs uniform management for users, load balancing can be better implemented, and the utilization of spectrum resources within the whole coverage can be increased.

UE mobility management: UE mobility management may include multiple aspects, such as locating, handover, paging, and location update. Detailed descriptions are provided hereunder.

Locating refers to determining the location of a user. In radio communication, the distance from a user UE to a base station or the difference of distances from the user UE to different base stations may be obtained by measuring the time of arrival of a signal transmitted by the base station at the user UE or by measuring the difference of time of arrival of signals from different base stations at the user UE, and then the location of the user UE may be calculated according to the location of the base station.

Through the cooperation between the macro base station and the micro base station, the UE may be located more quickly and precisely; through the macro base station and the micro base station, phase-by-phase locating may be implemented at different levels, namely, the macro cell level and the micro cell level. Because the macro cell has a large coverage , the relative precision of locating is poor but the relative speed of locating is high; because the micro cell has a small coverage, locating can be implemented more precisely. Therefore, the requirements for user locating at different precisions and speeds are satisfied. For example, the macro base station may perform fast rough locating in the first phase, and the micro base station performs precise locating in the second phase. The macro base station and the micro base station may perform locating together mainly under the instruction of a location function entity on the network side. For example, a corresponding message is sent to the macro base station and the micro base station, instructing the macro base station and the micro base station to send a locating signal and a locating message at a particular time point (to notify the UE) to perform locating.

The handover is an important part in a cellular system. When a UE is carrying out a service, if the location of the UE changes, for example, the UE moves from one cell to another cell, a handover is required. In the prior art, both the macro base station and the micro base station need to broadcast respective neighboring cell information, and the handover process needs to be completed by the source micro base station. Therefore, a service interruption may be caused in the handover process. In an embodiment of the present invention, related neighboring cell information of micro base stations may be broadcast by the macro base station at specific time intervals uniformly. Thereby, if the UE receives a message broadcast by the macro base station, the UE can know the neighboring cell information of the micro base station that it attaches to, and then initiate a handover request to the macro base station to complete a handover.

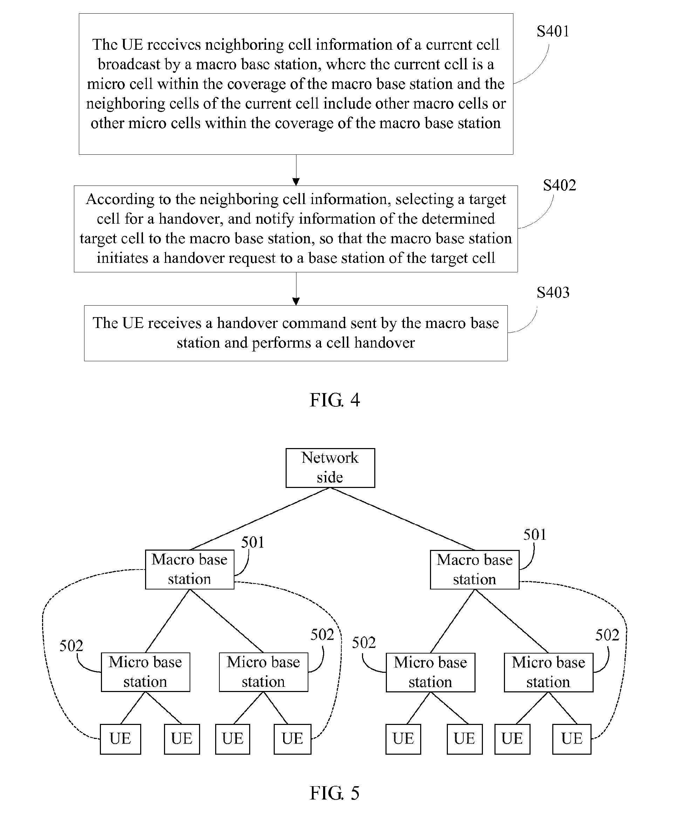

Assuming that before the handover, the data plane of the UE is connected to the Internet by the source micro cell via the serving GW, referring to FIG. 4, the inter-cell handover process of the UE in the moving process may include the following steps:
S401. The UE receives neighboring cell information of a current cell broadcast by a macro base station, where the current cell is a micro cell within the coverage of the macro base station and the neighboring cells of the current cell include other macro cells or other micro cells within the coverage of the macro base station.
   The macro base station broadcasts the neighboring cell information of each micro base station within coverage of the macro base station to the UE. When the UE needs to be handed over, the UE may scan the broadcast messages of the base station and obtain the neighboring cell information of the source micro base station currently serving the UE. The neighboring cells of one micro base station may be other micro cells within the coverage of the same macro base station and may also be other macro cells.
S402. According to the neighboring cell information, selecting a target cell for a handover, and notify information of the determined target cell to the macro base station, so that the macro base station initiates a handover request to a base station of the target cell.
   The UE may make a handover decision according to its communication status (such as a signal-to-noise ratio), and when deciding to perform a handover, the UE sends a handover trigger to the macro base station that it attaches to; or the macro base station may make a handover decision according to the status (location, signal-to-noise ratio, motion prediction, and load) of the micro base station currently serving the UE and select the target base station for the UE.
   Further, if the selected target base station is a micro base station, the macro base station sends a handover request to the selected target micro base station, and the target micro base station returns a corresponding handover request ACK. Then the macro base station transfers the UE related context to the target micro base station. Then the macro base station sends a handover indication to the source micro base station, and the source micro base station returns a corresponding handover indication ACK.
   The related context is generated in the UE authentication and authorization process when the UE accesses the network. After the handover, the UE related context does not need to be regenerated and may be directly transferred to the target micro base station. The related context includes a security key obtained when the UE is authenticated and information such as a QOS policy and a deep packet policy obtained when the UE is authorized.
   The handover decision is either completed by the UE and notified to the macro base station, or completed by the macro base station. However, the source micro base station does not know that the UE requires an outgoing handover. Therefore, the macro base station is required to notify the information to the source micro base station.
S403. The UE receives a handover command sent by the macro base station and performs a cell handover.

The UE receives the handover command sent by the macro base station and starts the handover process. Specifically, the UE initiates a network reattach operation to the target micro base station and completes a handover operation; the micro base station of the target cell sends handover complete signaling to the MME directly or via the base station of the macro cell to indicate that the handover is complete; the MME notifies the Serving GW and initiates a data channel update, and after the update, the user is connected to the Serving GW through the micro base station of the target cell.

In the above handover process, because the neighboring cell information is broadcast by the macro base station uniformly, the user UE can receive the information conveniently, and the scanning requirements of the UE are reduced. Meanwhile, the macro base station has a connection with the UE all the time. Therefore, before the handover between two micro base stations is completed, if any data arrives, the data may be sent by the macro base station temporarily, which avoids the interruption of normal communication of the UE. In addition, the resources of the target micro base station and the access timeslot for the UE may be scheduled by the macro base station in advance and notified to the UE, which reduces the processing requirements of the micro base station. The movement and handover of the user UE between micro cells are controlled by the macro cell uniformly, which accelerates the handover process and ensures the integrity of data transmission.

When a UE is a service receiver, if the UE is in idle mode, it is necessary to page the UE first and wake up the UE. Because the UE is in idle mode, the network side is unable to know the current location of the UE. Therefore, in the prior art, when a UE needs to be paged, it is necessary to send a paging request to all macro base stations and micro base stations in the network, and apparently, the paging efficiency is low. In an embodiment of the present invention, the macro base station has the information about all the micro base stations within coverage of the macro base station. Therefore, the specific paging process may be performed as follows:
Step 1: The MME initiates a paging process by sending a paging message at the Macro Cell level to multiple macro base stations respectively.
   Each UE has an ID for uniquely identifying the UE. Therefore, when the UE enters the idle state, the network side may generate a Hash value according to the ID to represent the UE. The Hash value may be carried in the paging message. After the UE receives the Hash value, the UE compares the value with its own Hash value to judge whether the UE is paged, and if so, the UE exits the idle mode and is ready to perform some corresponding operations.
Step 2: Upon receiving the paging message from the MME, the macro base stations send a corresponding paging message on respective air interfaces to each UE.
Step 3: Upon receiving the paging message, if the UE determines that the UE itself is paged, the UE may send a RAHC preamble message to a macro base station.
Step 4: Upon receiving the message, the macro base station returns a RACH response to the MME; upon receiving the response message, the MME may stop sending paging messages to other macro base stations.
   Because the MME may send a paging message periodically, the MME will periodically send the paging message until it receives a response from a macro base station. When the macro base station receives a RAHC preamble from a UE, it is proved that the desired UE is found. In this case, the macro base station may notify the MME, and accordingly, upon receiving the response, the MME may stop sending the paging message.
Step 5: The UE sends a connection request to the macro base station and exits the idle mode.
Step 6: Upon receiving the message, the macro base station sends an initial UE message to the MME, and meanwhile, returns a connection setup message to the UE.
Step 7: The MME sends an initial context setup request to the macro base station.
   After the UE enters the idle mode, the context information maintained by the previous macro base station is deleted, and the context information of the UE in the idle mode is stored to the MME. However, after the UE is waked up, the UE may have moved to the coverage of another macro base station. Therefore, a context setup request needs to be sent, and the context information is stored to the new macro base station.
Step 8: According to the location of the UE, QoS requirement of the UE, and so on, the macro base station determines a micro base station providing the data transmission service for the UE, and sends a radio bearer setup message to the micro base station.
Step 9: The micro base station sends a radio bearer setup message to the UE to initiate an air interface radio bearer setup process, and the UE returns a radio bearer setup complete message to the micro base station.
Step 10: The micro base station returns a radio bearer setup complete message to the macro base station, and the macro base station returns an initial context setup complete message to the MME.

In addition, usually, if the UE does not carry out a service, the UE should be in the idle mode to save power thereof. However, if the UE is in the moving state, to ensure that the UE can perform data communication anytime, the location information of the UE may need to be updated. In the prior art, if the user moves from one micro cell to another micro cell, the location information of the UE needs to be updated. Because the coverage of the micro cell is small, the location information may need to be updated frequently, and consequently, the UE is unable to be in the idle mode really.

In the embodiment of the present invention, because the macro cell performs uniform control for the control plane of each micro cell, when the user moves from one micro base station to another within the coverage of the same macro base station, there is no need to update the location information of the UE. Therefore, the location of the UE is updated less frequently, and when the UE does not perform data communication, so long as the UE does not leave the coverage of the macro cell, the UE may be in the idle state really, and thus power is saved.

The control plane related to user access management and mobility management has been described in detail above. In addition to the preceding description, other benefits of the cellular communication system provided by the embodiment of the present invention are described hereunder.

First, the coordination between micro base stations is implemented. Because of the coordination between multiple micro base stations, the UE may be provided with better data transmission services. Generally, one UE may attach to multiple micro base stations, and these micro base stations jointly provide communication support for the UE. However, how these micro base stations participate in the coordination and which coordination mode is used are the problems to be solved. The cellular communication system provided by the embodiment of the present invention can properly implement the coordination between micro base stations.

The reason is that the spectrum and timeslot resources used in the coordination are selected and controlled by the related macro base station uniformly according to the current states of the UE and network. Thereby, the synchronization between micro stations participating in the coordination can be better implemented, the communication signaling and procedures between micro base stations are reduced, the backhaul network transmission pressure of the micro base stations is alleviated, and coordination can be established faster. Furthermore, because the macro base station performs uniform control, a most suitable micro cell may be selected for coordinated communication according to the UE state and network load.

In addition, the connection management signaling of the micro base station may also be managed and sent by the macro base station. In an OFDMA system, this may be implemented by the macro base station by allocating a part of subcarriers. The connection management signaling is an instruction for allocating OFDMA resources to the UE, where the OFDMA resources are used to send data to the UE or used by the UE to send data. In the prior art, the signaling is sent by the micro base station that the UE attaches to.

In the embodiment of the present invention, the connection management signaling of the micro base station is sent by the macro cell uniformly according to mobility parameters and other parameters of the UE. By allocating specific OFDMA subcarriers, and establishing a mapping relationship between the specific subcarriers, micro cells, and UEs (for example, a dedicated area is defined), the corresponding overhead may be further reduced.

With respect to the implementation of the user data plane through the micro base station, when the user data plane is implemented through the micro base station, the user plane of the macro base station may be accessed (data is transmitted from the UE to the micro base station, and then from the micro base station to the macro base station, and finally to the Internet via the serving GW and the PDN GW) through the AP of the micro base station (which may be a WLAN AP, or a Femto AP, or a Realy AP in a Realy scenario), further via the core network data plane of the macro base station, for example, via the d1 interface in FIG. 2. Certainly, the Internet may be accessed directly through the AP of the micro cell (which may be a WLAN AP, or a Femto AP, or a Realy AP in a Realy scenario), for example, via the d2 interface in FIG. 2.

As mentioned above, when necessary, the user data plane may be implemented by the macro base station. In the embodiment of the present invention, because the uplink data of the user is first received by the micro base station, a specific data plane policy may be selected by the micro base station. In the specific implementation, after the micro base station receives an uplink packet sent by the user, the micro base station may perform deep packet inspection for the data packet to judge the service type of the data packet, QoS requirement, or whether the data packet is delay-sensitive, and so on, and then select a corresponding data transmission policy according to the judgment results. For example, when selections are made according to service policies, the flow directions of services may be controlled according to whether the services are value-added services of an operator or according to the inherent nature of the services. To be specific, services passing through the AP (which may be a WLAN AP, or a Femto AP, or a Realy AP in a Realy scenario) of the micro cell are classified based on the service policies, a part of services pass through the user plane of the macro base station and the core network data plane of the macro base station, and a part of services are directly transmitted to the Internet through the micro base station; that is, a part of services pass through the d1 interface in FIG. 2, and a part of services pass through the d2 interface in FIG. 2.

Certainly, with respect to a downlink data packet, a data gateway (for example, a Serving Gateway) may perform deep packet inspection to judge the service type of the data packet, QoS requirement, or whether the data packet is delay-sensitive, and so on, and then according to the judgment results, select to transmit the data to the user through the macro base station or the micro base station.

In conclusion, in the embodiment of the present invention, for the user data plane, better QoS guarantee can be provided at the macro base station level and the micro base station level, for example, different policies are used to transmit delay-sensitive and high-rate services.

As mentioned above, referring to FIG. 5, an embodiment of the present invention provides a cellular communication system, including a macro base station 501 and at least one micro base station 502 within coverage of the macro base station 501 (for example, two micro base stations as shown in the figure).

The macro base station 501 is configured to: establish a control channel for a UE served by the micro base station; perform an access management operation for the UE served by the micro base station within the coverage of the macro base station 501; and receive a handover request of the UE and hand over the UE to another micro base station within the coverage of the macro base station 501.

The micro base station 502 is configured to establish a data channel for the accessed UE and perform data transmission with the UE.

The dashed line in FIG. 5 indicates that the user control channel is established by the macro base station. In the cellular communication system provided by the embodiment of the present invention, the main task of the micro base station 502 is to establish and maintain the user data plane, and there is no need to waste a lot of resources for the control plane.

In a handover process, if there is data to be transmitted, the data may be transmitted by the macro base station temporarily. In this case, the macro base station 501 may include:
a data forwarding unit, configured to: receive user data to be forwarded before the UE is handed over between micro base stations within the coverage of the macro base station and send the user data to a receiver.

When it is necessary to initiate paging to a UE in a micro cell, optionally, a paging message is not sent to a micro base station, but to a macro base station that covers the micro base station. In this case, the macro base station 501 may further include:
a paging unit, configured to receive a paging message from a mobility management entity (for example, an MME) and initiate paging to the UE served by the base station within the coverage to wake up the UE. Certainly, after the UE receives the paging message, the UE may return a response message to the macro base station, and the macro base station may further return a response message to the MME to notify the MME of stopping sending the paging message.

Certainly, the macro base station may be not merely responsible for user control plane operations. For example, if delay-sensitive data needs to be transmitted, to meet the delay requirement, the data transmission may be completed by the macro base station. In this case, the macro base station 501 may further include:
a data channel establishing unit, configured to establish a data channel for the UE to complete the transmission of the delay-sensitive data.

In addition, the macro base station 501 may further include: a coordination management unit, configured to uniformly select and control spectrum and timeslot resources used in coordination according to current states of the UE and the network, and allocate a micro base station within the coverage for the UE to attach to, in order to implement coordination between micro base stations. Thereby, the synchronization between micro stations participating in the coordination can be better implemented, the communication signaling and procedures between micro base stations are reduced, the backhaul network transmission pressure of the micro base stations is alleviated, and coordination can be established faster. Furthermore, because the macro base station performs uniform control, a most suitable micro cell may be selected for coordinated communication according to the UE state and network load.

Alternatively, the macro base station 501 may further include: a connection management unit, configured to manage and send connection management signaling of each micro base station within the coverage of the macro base station 501. Thereby, the system overhead generated when the micro base station manages and sends connection management signaling may be reduced.

In the embodiment of the present invention, the macro base station has a certain topological relationship with the micro base stations within coverage of the macro base station. This topological relationship may be established and maintained by the macro base station or established and maintained by a network-side entity.

Specifically, in the first case, the macro base station 501 may further include: a topological relationship management unit, configured to establish and maintain a topological relationship between the macro base station and the micro base stations within coverage of the macro base station. In the second case, the system may further include: a network management control entity, configured to establish and maintain a topological relationship between the macro base station and the micro base stations within coverage of the macro base station.

For the user data plane, better QoS guarantee can be provided at the macro base station level and the micro base station level. Specifically, with respect to an uplink data packet, the micro base station 502 may be configured to perform deep packet inspection for the received uplink data packet and select a corresponding data transmission mode according to the deep packet inspection result. With respect to a downlink data packet, the system may further include: a data gateway deep packet inspection unit, configured to perform deep packet inspection for the downlink packet; and a selecting unit, configured to select a corresponding data transmission mode according to the deep packet inspection result. The deep packet inspection unit and the selecting unit may be located in a micro base station or a gateway.

In the embodiment of the present invention, the micro base station may exist in a variety of forms, for example, Relay, H-eNB, Wifi AP, or pico.

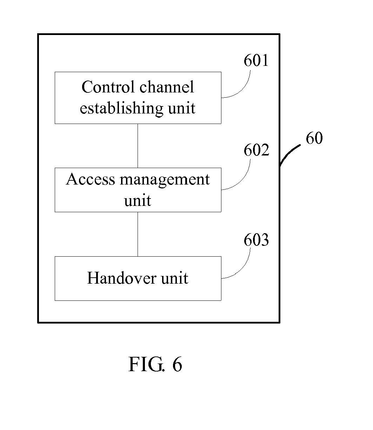

Accordingly, an embodiment of the present invention further provides a macro base station. Referring to FIG. 6, the macro base station 60 includes the following units:
a control channel establishing unit 601, configured to establish a control channel for a UE served by a micro base station within the coverage of the macro base station;
an access management unit 602, configured to perform an access management operation for the UE served by the micro base station within the coverage; and
a handover unit 603, configured to receive a handover request of the UE and hand over the UE to another micro base station within the coverage.

Optionally, the macro base station may further include:
a data forwarding unit, configured to: receive user data to be forwarded before the UE is handed over between micro base stations within the coverage of the macro base station and send the user data to a receiver.

Optionally, the macro base station may further include:
a paging unit, configured to receive a paging message from a mobility management entity and initiate paging to the UE served by the micro base station within the coverage to wake up the UE.

When the UE served by the micro base station within the coverage needs to transmit delay-sensitive data, the macro base station may further include:
a data channel establishing unit, configured to establish a data channel for the UE to complete the transmission of the delay-sensitive data.

Optionally, the macro base station may further include:
a coordination management unit, configured to uniformly select and control spectrum and timeslot resources used in coordination according to current states of the UE and the network, and allocate a micro base station for the UE to attach to, in order to implement coordination between micro base stations.

Optionally, the macro base station may further include:
a connection management unit, configured to manage and send connection management signaling of each micro base station within the coverage.

Optionally, the macro base station may further include:
a topological relationship management unit, configured to establish and maintain a topological relationship between the macro base station and the micro base stations within the coverage.

According to the embodiments of the present invention, the control channel of the user served by the micro cell can be separated from the data channel of the user, and the macro base station establishes the control channel of the UE to implement control plane related operations. Therefore, the micro base station is only used to establish the data plane link of the user to implement data transmission. Therefore, the resources of the micro base station can be better used for data communication. Hence, the negative impacts on the system which are caused by the coexistence of macro cells and micro cells in the networking can be reduced.

## Claims

1. A cellular communication system, comprising a macro base station and at least one micro base station within coverage of the macro base station, wherein:
the macro base station is configured to establish a control channel for a UE (user equipment) served by the micro base station, perform an access management operation for the UE served by the micro base station within the coverage of the macro base station; and receive a handover request of the UE and hand over the UE to another micro base station within the coverage of the macro base station; and
the micro base station is configured to establish a data channel for the accessed UE and perform data transmission with the UE.

2. The system according to claim 1, wherein the macro base station further comprises:
a data forwarding unit, configured to receive user data to be forwarded before the UE is handed over between micro base stations within the coverage of the macro base station and send the user data to a receiver.

3. The system according to claim 1, wherein the macro base station comprises:
a paging unit, configured to receive a paging message from a mobility management entity and initiate paging to the UE served by the base station within the coverage of the macro base station to wake up the UE.

4. The system according to claim 1, wherein, when the UE served by the micro base station within the coverage of the macro base station needs to transmit delay-sensitive data, the macro base station further comprises:
a data channel establishing unit, configured to establish a data channel for the UE to complete the transmission of the delay-sensitive data.

5. The system according to claim 1, wherein the macro base station further comprises:
a coordination management unit, configured to select and control spectrum and timeslot resources used in coordination according to current states of the UE and a network, and allocate a micro base station within the coverage of the macro base station for the UE to attach to, in order to implement coordination between micro base stations.

6. The system according to claim 1, wherein the macro base station further comprises:
a connection management unit, configured to manage and send connection management signaling of the micro base station within the coverage of the macro base station.

7. The system according to claim 1, further comprising:
a network management control entity, configured to establish and maintain a topological relationship between the macro base station and the micro base station within the coverage of the macro base station.

8. A UE access management method, comprising:
sending periodically, by a macro base station, system broadcast messages of itself and system broadcast messages of each micro base station within coverage of the macro base station, wherein the system broadcast messages is used for the UE to obtains related system parameters to access a network, wherein the micro base station within the coverage of the macro base station establishes a data channel for the UE when the UE needs to access the micro base station;
performing, by the macro base station, quality of service, Qos, authorization for the UE for network access; and
establishing, by the macro base station, a control channel for the UE according to QoS, and establishing and maintaining user information.

9. The method according to claim 8, further comprising:
establishing, by the macro base station, a data channel for the UE so that the UE transmits delay-sensitive data through the data channel established by the macro base station.

10. An inter-cell handover method for a UE, comprising:
receiving, by the UE, neighboring cell information of a current cell broadcast by a macro base station, wherein the current cell is a micro cell within coverage of the macro base station and the neighboring cells of the current cell comprise other macro cells or other micro cells within the coverage of the macro base station;
according to the neighboring cell information, selecting a target cell for a handover, and notifying information of the determined target cell to the macro base station, so that the macro base station initiates a handover request to a base station of the target cell; and
receiving, by the UE, a handover command sent by the macro base station, and performing a cell handover.

11. The method according to claim 10, wherein, when the target cell is a micro cell within the coverage of the macro base station, the macro base station initiates the handover request to the base station of the target cell comprises:
sending, by the macro base station, the handover request to a micro base station of the target cell, and after the micro base station of the target cell returns a corresponding handover request ACK, transferring, by the macro base station, UE related context to the micro base station of the target cell.

12. The method according to claim 10, further comprising:
sending, by a micro base station of the target cell, handover complete signaling to a mobility management entity directly or via the macro base station to indicate that the handover is complete.

13. A macro base station, comprising:
a control channel establishing unit, configured to establish a control channel for a UE served by a micro base station within coverage of the macro base station;
an access management unit, configured to perform an access management operation for the UE served by the micro base station within the coverage of the macro base station; and
a handover unit, configured to receive a handover request of the UE and hand over the UE to another micro base station within the coverage of the macro base station.

14. The macro base station according to claim 13, further comprising:
a data forwarding unit, configured to: receive user data to be forwarded before the UE is handed over between micro base stations within the coverage of the macro base station and send the user data to a receiver.

15. The macro base station according to claim 13, further comprising:
a paging unit, configured to receive a paging message from a mobility management entity and initiate paging to the UE served by the base station within the coverage of the macro base station to wake up the UE.

16. The macro base station according to claim 13, wherein, when the UE served by the micro base station within the coverage of the macro base station needs to transmit delay-sensitive data, the macro base station further comprises:
a data channel establishing unit, configured to establish a data channel for the UE to complete the transmission of the delay-sensitive data.

17. The macro base station according to claim 13, further comprising:
a coordination management unit, configured to select and control spectrum and timeslot resources used in coordination according to current states of the UE and a network, and allocate a micro base station within the coverage of the macro base station for the UE to attach to, in order to implement coordination between micro base stations.

18. The macro base station according to claim 13, further comprising:
a connection management unit, configured to manage and send connection management signaling of the micro base station within the coverage of the macro base station.

19. The macro base station according to claim 13, further comprising:
a topological relationship management unit, configured to establish and maintain a topological relationship between the macro base station and the micro base station within the coverage of the macro base station.
